# EUROPÄISCHE PATENTANMELDUNG

(11) **EP 2 369 252 A2**
(43) Veröffentlichungstag der Anmeldung: **28.09.2011**
(21) Anmeldenummer: 11002175.5
(22) Anmeldetag: 16.03.2011
(51) Int. Cl.: F24F 5/00, F24F 12/00

(54) **Verfahren zum Kühlen eines Raumes**

(30) Priorität: 16.03.2010 DE 102010011623; 11.05.2010 DE 102010020043
(71) Anmelder: Kampmann GmbH, 49811 Lingen (Ems) (DE)
(72) Erfinder: Ensink, Hermann, Dipl.-Ing., 49846 Hoogstede (DE)
(74) Vertreter: Möller, Friedrich

(57) **Zusammenfassung**

Bei nach dem Kühlungsprinzip arbeitenden Kühlvorrichtungen ist Prozessluft erforderlich. Diese verdunstet Feuchtigkeit, die die Temperatur einer aus Außenluft gebildeten Zuluft zum Kühlen eines Raumes verringert. Die Prozessluft wird bisher ausschließlich aus einem Teil der Zuluft gebildet, wodurch ein Zuluftventilator (13) mehr Zuluft fördern muss, als zum Kühlen des Raumes erforderlich ist. Der Zuluftventilator (13) benötigt dadurch mehr elektrische Energie.

Die Erfindung sieht es vor, gegebenenfalls die Prozessluft aus der Abluft aus dem Raum zu bilden. Dann braucht der Zuluftventilator (13) nur noch die zum Einblasen in den zu kühlenden Raum benötigte Zuluft umzuwälzen und nicht mehr die Prozessluft. Dadurch kann elektrische Energie eingespart werden, was das Kühlen wirtschaftlicher macht.

## Beschreibung

Die Erfindung betrifft ein Verfahren zum Kühlen eines Raumes gemäß dem Oberbegriff des Anspruchs 1.

Räume werden auf verschiedene Weise gekühlt. Die Erfindung befasst sich mit der indirekten Verdunstungskühlung. Damit dabei die Primärluft, das ist die dem Raum zuzuführende frische Zuluft, nicht mit zusätzlicher Feuchtigkeit belastet wird, ist es bekannt, Prozessluft zu verwenden. Mit dem Prozessluftstrom findet dann die Verdunstungskühlung statt, wodurch der Primärluftstrom, also die gekühlte Zuluft, nicht mit zusätzlicher Feuchtigkeit belastet wird.

Bei der Verdunstungskühlung mit Prozessluft wird Zuluft als Prozessluft zurückgeführt. Dadurch muss der Zuluftventilator nicht nur den Zuluftstrom, sondern auch den Prozessluftstrom erzeugen. Dieser Luftstrom kann bis zu ⅓ des benötigten Zuluftstroms betragen. Dadurch benötigt das bekannte Verfahren der Verdunstungskühlung verhältnismäßig viel elektrische Energie zum Betrieb des Zuluftventilators.

Der Erfindung liegt die Aufgabe zugrunde, ein Verfahren zum Kühlen eines Raums nach dem Verdunstungsprinzip zu schaffen, das weniger Energie benötigt als bekannte Verdunstungskühlungen.

Ein Verfahren zur Lösung dieser Aufgabe weist die Maßnahmen des Anspruchs 1 auf. Demnach wird als Prozessluft wahlweise Zuluft und/oder Abluft aus dem zu kühlenden Raum verwendet und in Abhängigkeit vom Zustand der Abluft und/oder der Zuluft entweder Abluft, Zuluft oder Anteile von beiden als Prozessluft verwendet. Immer dann, wenn die Voraussetzungen zur Verwendung von Abluft als Prozessluft erfüllt sind, wird statt der Zuluft Abluft als Prozessluft verwendet. Da die Abluft ohnehin von einem Abluftventilator abtransportiert werden muss, hat die Verwendung der Abluft als Prozessluft keinen zusätzlichen Energiebedarf zur Folge. Der Zuluftventilator muss dann nur die Zuluft in den zu kühlenden Raum transportieren und nicht auch noch Prozessluft. Dadurch ist das erfindungsgemäße Verfahren energiesparender. Die Energieeinsparung wird um so größer, je mehr Abluft als Prozessluft verwendet werden kann.

Vorzugsweise wird in Abhängigkeit des Feuchtegehalts und/ oder der Temperatur der Abluft und/oder der Zuluft entweder Abluft oder Zuluft oder Anteile von beiden als Prozessluft verwendet. Anhand der Feuchte, vorzugsweise eines Feuchteverhältnisses bzw. einer Feuchtedifferenz, oder alternativ bzw. zusätzlich auch der Temperatur kann rechnerisch ermittelt werden, ob sich die Abluft als Prozessluft eignet. Nur wenn die Abluft nicht als Prozessluft geeignet ist, wird Zuluft als Prozessluft verwendet. Um den Anteil der Zuluft an der Prozessluft möglichst gering zu halten, können auch Anteile von Zu- und Abluft als Prozessluft verwendet werden. Anhand der Feuchte und/oder Temperatur insbesondere der Abluft, vorzugsweise aber auch der Zuluft, wird rechnerisch ermittelt, wie hoch der Anteil der Abluft und der Zuluft an der Prozessluft sein muss. Ziel dieser Berechnung Ist es, einen möglichst großen Anteil an Abluft für die Prozessluft zu verwenden, damit der Zuluftventliator möglichst wenig zusätzliche Zuluft, die als Prozessluft eingesetzt wird, fördern muss.

Eine vorteilhafte Weiterbildung des Verfahrens sieht es vor, mindestens die Feuchte der Abluft zu ermitteln. Vorzugsweise werden die Feuchte der Abluft und der Zuluft, Insbesondere auch die Temperatur der Abluft und/oder Zuluft, ermittelt. Diese Ermittlung der Feuchte und/oder Temperatur erfolgt bevorzugt kontinuierlich, damit auf Veränderungen der Feuchte bzw. Temperatur sofort reagiert werden kann und dementsprechend der Anteil der Abluft an der Prozessluft möglichst groß sein kann, um elektrische Energie zum Betrieb des Zuluftventilators so weit wie möglich einzusparen.

Es ist bei einer besonders vorteilhaften Weiterbildung der Erfindung vorgesehen, mindestens anhand der gemessenen Feuchten zu entscheiden, ob sich die Abluft als Prozessluft eignet oder wie hoch der Anteil der als Prozessluft verwendeten Abluft maximal sein kann. Das geschieht insbesondere nach einem Regelalgorithmus, der die gemessenen Werte für die Feuchte und/oder Temperatur auswertet und eine Steuerung oder Regelung beeinflusst, die die optimale Prozessluft und Verwendung der Abluft, der Zuluft oder eines Gemisches aus beidem festlegt, und zwar vor allem regelt. Wenn die Differenz aus der Abluftfeuchte und dem Anteil X trockener Luft kleiner ist als die absolute Außenfeuchte, wird die Abluft befeuchtet. Dabei ist der Anteil X kein fester Wert. Vielmehr ergibt er sich aus dem Vergleich der Energieaufwendungen für den Ventilator für den Fall der Prozessluft-Befeuchtung und den Fall der Abluft-Befeuchtung. Der Ventilator muss im Falle einer Prozessluft-Befeuchtung 20 bis 40 %, vorzugsweise etwa 30 %, mehr Abluft fördern. Die Kosten werden verglichen mit dem monetären Ertrag der Differenz zwischen Prozessluft-Befeuchtung und Abluft-Befeuchtung. Ist dieser Ertrag größer als die Kosten für den erhöhten Energieaufwand zum Transport der Prozessluft, wird die Prozessluft-Befeuchtung gewählt Da die Energiekostenaufwendungen für den Lufttransport Geräte-und Gesamtanlagen abhängig sind, wird der Anteil X individuell für jedes einzelne Gerät bestimmt. Ist also der COP_{PLK} (Coefficient Of Performance der Prozessluft-Kühlung) kleiner als der COP_{Abluft} (Coefficient Of Performance der Abluft-Kühlung), wird die Abluft-Befeuchtung eingesetzt. Ist hingegen der COP_{PLK} größer als der COP_{Abluft,} wird die Prozessluftkühlung gewählt. Der COP-Wert ist ein allgemeiner branchenüblicher Wert, der das Verhältnis zwischen erbrachter Leistung dividiert durch die aufgewandte elektrische Energie für den Ventilator beinhaltet. Auf diese Weise wird sichergestellt, dass die Verdunstungskühlung mit optimalem Wirkungsgrad und möglichst wenig Zuluft als Prozessluft arbeitet.

Verfahrensmäßig ist insbesondere vorgesehen, die Kühlung durch indirekte Verdunstung mit einem befeuchteten Wärmetauscher durchzuführen, wobei der Wärmetauscher einerseits von der Zuluft und andererseits von der Abluft durchströmt wird. Auf diese Weise ist es möglich, je nach Zustand der Abluft und der Zuluft die Prozessluft aus der Abluft oder der Zuluft bzw. festgelegten Anteilen von beiden zu bilden.

Bevorzugt ist es vorgesehen, bei Bedarf mindestens einen Teil der Abluft am Wärmetauscher vorbeizuleiten. Wenn sich als Prozessluft nur Zuluft eignet, kann die Abluft am Wärmetauscher vorbeigeleitet werden, um den Wirkungsgrad der Verdunstungskühlung zu verbessern. Hingegen wird die gesamte Abluft durch den Wärmetauscher geleitet, wenn sie sich allein zur Bildung der Prozessluft eignet. Wenn nur ein Teil der Abluft für die Prozessluft geeignet ist, wird der Abluftstrom vor dem Wärmetauscher verteilt, indem ein Teil am Wärmetauscher vorbei und ein anderer Teil durch den Wärmetauscher strömt, und zwar zusammen mit einem Teil der auch zur Bildung der Prozessluft herangezogenen Zuluft.

Vorzugsweise wird die Einstellung der Menge der Abluft, die am Wärmetauscher vorbeigeführt wird, von einer Steuerung beeinflusst, die einen Stellantrieb einer Prozessluftklappe mit einem Bypass zum bedarfsweisen Vorbeileiten der Abluft am Wärmetauscher bedarfsgerecht steuert, insbesondere entsprechend regelt.

Die Verdunstungskühlung wird durch eine Befeuchtung des Wärmetauschers erwirkt. Vorzugsweise wird der Wärmetauscher so befeuchtet, dass die Befeuchtung im Wärmetauscher stattfindet. Zusätzlich oder alternativ kann es vorgesehen sein, auch eine Vorkammer des Wärmetauschers zu befeuchten. Infolge dessen ist sichergestellt, dass es keine oder nur wenige unbefeuchtete Wärmetauscherflächen gibt, die die Wirksamkeit und/oder den Wirkungsgrad der Verdunstungskühlung herabsetzen.

Bevorzugt ist es vorgesehen, als Zuluft Frischluft, und zwar vor allem frische Außenluft, zu verwenden. Diese eignet sich besonders als Zuluft, weil die Feuchte der Außenluft in der Regel geringer ist als die Abluft aus dem zu kühlenden Raum.

Ein bevorzugtes Ausführungsbeispiel der Erfindung wird nachfolgend anhand der Zeichnung näher erläutert. In der Zeichnung zeigen:
- Fig. 1: eine schematische Darstellung einer Kühlvorrichtung zur Durchführung des Verfahrens mit eingezeichneten Strömungswegen der Zuluft, der Abluft und der Prozessluft bei Bildung der Prozessluft aus der Zuluft, und
- Fig. 2: eine Darstellung analog zur Fig. 1 für den Fall der Verwendung von Abluft als Prozessluft.

Die hier gezeigte Kühlvorrichtung dient zum Kühlen von Räumen nach dem Prinzip der indirekten Verdunstungskühlung unter Verwendung von Prozessluft, um die zur Bildung von Zuluft dienende Außenluft nicht mit zusätzlicher Feuchtigkeit zu belasten.

Die Kühlvorrichtung verfügt über ein vorzugsweise quaderförmiges Gehäuse 10. Im Gehäuse 10 befindet sich ein Wärmetauscher 11, der vorzugsweise eine hydrophile Schicht auf den mit Prozessluft in Kontakt kommenden Wärmetauscherflächen aufweist. Der Wärmetauscher 11 wird im Gegenstrom oder Kreuzstrom von Zuluft als Primärluft und Prozessluft als Sekundärluft durchströmt. Im Gehäuse 10 befindet sich außerdem eine Bypassklappe 12, der ein nicht gezeigter Stellantrieb zugeordnet ist. Außerdem sind im Gehäuse 10 ein Zuluftventilator 13 und ein Abluftventilator 14 vorgesehen,

Die Kühlvorrichtung verfügt außerdem über eine in den Figuren nicht gezeigte Befeuchtungseinrichtung, womit die mit der Prozessluft in Kontakt kommenden Wärmetauscherflächen auf der Sekundärseite des Wärmetauschers 11 mit Feuchtigkeit benetzbar sind, so dass der Wärmetauschers insbesondere im Inneren befeuchtet wird. Die Befeuchtung des Wärmetauschers 11 kann auch alternativ oder zusätzlich in einer in den Figuren nicht gezeigten Vorkammer erfolgen, die in Bezug auf die Strömungsrichtung der Prozessluft durch den Wärmetauscher 11 vor demselben angeordnet ist.

Das Gehäuse 10 ist mit einer Zulufteintrittsöffnung 15, einer Zuluftaustrittsöftnung 16, einer Ablufteintrittsöffnung 17 und einer Abluftaustrittsöffnung 18 versehen. Im gezeigten Ausführungsbeispiel ist sowohl der Zulufteintrittsöftnung 15 als auch der Ablufteintrittsöffnung 17 ein Luftfilter 19 bzw. 20 zugeordnet. Die Luftfilter 19 und 20 befinden sich bei der hier gezeigten Vorrichtung im Gehäuse 10 hinter der Zulufteintrittsöffnung 15 und der Ablufteintrittsöffnung 17. Die Luftfilter 19 bzw. 20 können aber an einer anderen Stelle vorgesehen sein.

Der Kühlvorrichtung ist ein Regler 21 zugeordnet, dem ein kombinierter Temperatur- und Feuchtefühler 22 oder alternativ auch ein Temperaturfühler und ein separater Feuchtefühler für die durch die Zulufteintrittsöffnung 15 in das Gehäuse 10 einströmende Zuluft sowie ein Temperaturfühler 23 und ein Feuchtefühler 24 oder ein kombinierter Temperatur- und Feuchtefühler für die in das Gehäuse 10 einströmende Abluft zugeordnet ist. Der Temperatur- und Feuchtefühler 22 misst bevorzugt die Außentemperatur. Der Regler 21 wird dadurch ständig mit der Temperatur der als Zuluft verwendeten Frischluft, insbesondere Außenluft, versorgt. Vom Temperaturfühler 23 und dem Feuchtefühler 24 werden sowohl die Temperatur als auch die Feuchte der den zu kühlenden Raum verlassenden Abluft ermittelt. Die Temperatur- und Feuchtefühler 22, der Temperaturfühler 23 und der Feuchtefühler 24 messen bevorzugt kontinuierlich die Temperatur der als Zuluft dienenden Frischluft und die Temperatur sowie die Feuchte der Abluft.

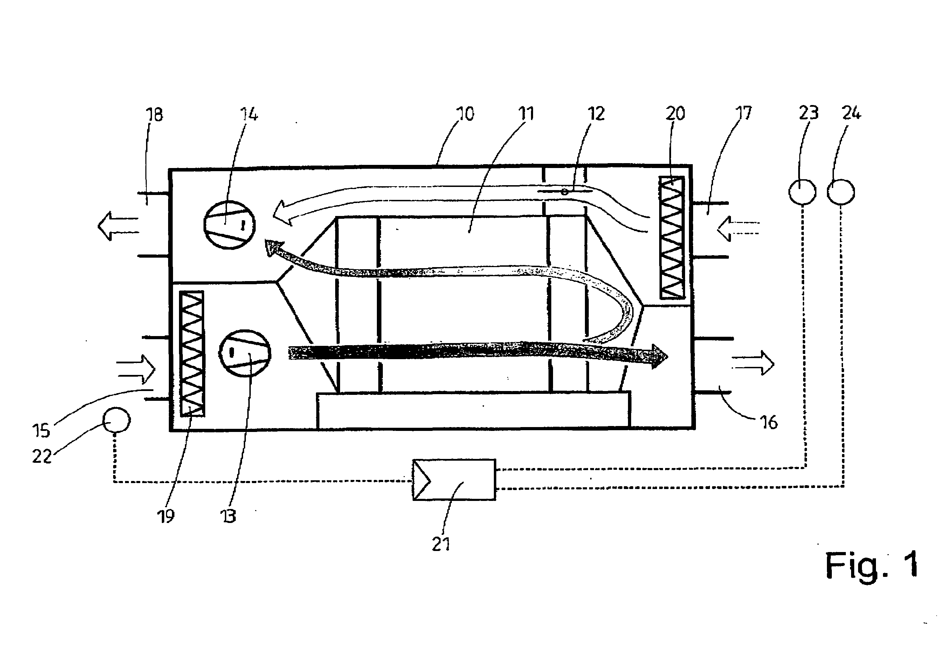

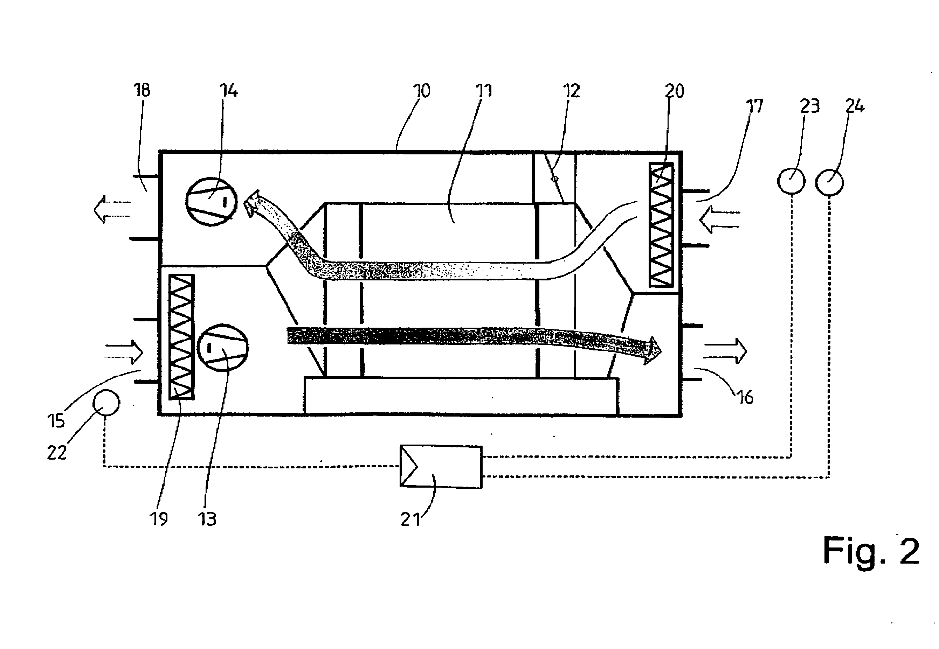

Das erfindungsgemäße Verfahren wird nachfolgend unter Bezugnahme auf die unterschiedlichen Betriebsweisen der Kühlvorrichtung darstellenden Fig. 1 und 2 erläutert: Bei der Verdunstungskühlung kommt es zu einer Kühlung der primärseitig durch den Wärmetauscher 11 strömenden Zuluft, wobei es sich bevorzugt um frische Außenluft handelt. Dabei findet eine Kühlung der Zuluft durch Verdunstung von Feuchtigkeit auf der Sekundärseite der Wärmetauscherflächen des Wärmetauschers 11 statt. Der Wirkungsgrad der Verdunstungskühlung ist um so größer, je geringer die Feuchte der die Sekundärseite des Wärmetauschers 11 durchströmenden Luft, nämlich die sogenannte Prozessluft, ist. Dabei spielt auch die Temperatur der Prozessluft eine Rolle.

Normalerweise wird als Prozessluft Zuluft, also Frischluft, verwendet, die in der Regel trockner ist als die Abluft aus dem zu kühlenden Raum. Dann muss der Zuluftventilator 13 aber nicht nur die benötigte Zuluft, sondern zusätzlich auch noch die bis zu einem Drittel der Zuluftmenge ausmachende Prozessluft durch den Wärmetauscher 11 fördern. Dazu benötigt der Zuluftventilator 13 zusätzlich elektrische Energie. Um diese zu sparen, sieht es die Erfindung vor, als Prozessluft die Abluft aus dem Raum oder teilweise Abluft und Zuluft zu verwenden, wenn das möglich ist. Dadurch kann Energie zum Betrieb des Zuluftventilators 13 gespart werden, weil dann der Zuluftventilator 13 keinen oder maximal einen Teil der Prozessluft fördern muss.

Die Fig. 1 zeigt den Betrieb der Kühlvorrichtung für den Fall, dass nur die Zuluft als Prozessluft geeignet ist. Dann wird ein Teil, und zwar bis zu einem Drittel, der die Primärseite des Wärmetauschers 10 durchströmenden Zuluft vom Zuluftstrom abgezweigt und als Prozessluft durch die Sekundärseite des Wärmetauschers 11 zurückgeleitet, die nach dem Passieren des Wärmetauschers 11 als Fortluft das Gehäuse 10 durch die Abluftaustrittsöffnung 18 verlässt. Die Prozessluft verdunstet dabei die Feuchtigkeit auf den sekundärseitigen Wärmetauscherplatten des Wärmetauschers 11, wobei Verdunstungsenergie entsteht, die die den Wärmetauscher 11 durchströmende Zuluft abgekühlt. Die Abluft aus dem Raum, die durch die Ablufteintrittsöffnung 17 des Gehäuses 10 eintritt, wird bei geöffneter Bypassklappe 12 am Wärmetauscher 11 vorbeigeleitet. Der sich hinter dem Wärmetauscher 11 sammelnde Prozessluftstrom und Abluftstrom werden dann vom Abluftventilator 14 über die Abtuftaustrittsöffnung 18 gemeinsam abgeführt, und zwar vorzugsweise als Fortluft ins Freie.

Die Fig. 2 zeigt den Fall, wo es möglich ist, als Prozessluft die Abluft zu verwenden. Dann wird die Bypassklappe 12 ganz oder teilweise geschlossen, so dass die Abluft aus dem Raum die Sekundärseite des Wärmetauschers 11 durchströmt. Dann führt die Abluft zur Verdunstung der Feuchtigkeit auf den sekundärseitigen Wärmetauscherflächen. Bei dieser Verfahrensweise wird vom Zuluftventilator 13 nur so viel Außenluft durch die Zulufteintrittsöffnung 14 angesaugt und als Zuluft durch den Wärmetauscher 11 in den zu kühlenden Raum transportiert wie erforderlich. Vom Zuluftstrom wird in diesem Fall kein Teilstrom zur Bildung der Prozessluft abgezweigt.

Es ist des Weiteren eine in den Figuren nicht gezeigte Betriebsweise denkbar, die eine Mischform der in der Fig. 1 und der Fig. 2 gezeigten Betriebsweise darstellt. Diese Betriebsweise ist dann zweckmäßig, wenn ein Teil der Abluft als Prozessluft geeignet ist, so dass nur noch ein restlicher Anteil der Prozessluft von der Zuluft aufgefüllt werden muss. Es muss dann von der Zuluft nicht die gesamte Prozessluft abgezweigt werden, sondern nur noch ein Teil. In dieser gemischten Betriebsweise ist die Bypassklappe 12 so weit geöffnet, dass am Wärmetauscher 11 nur ein solcher Anteil der Abluft vorbeiströmt, der nicht zur Bildung eines Teils der Prozessluft verwendet werden soll oder kann. Derjenige Teil der Abluft, der als Prozessluft geeignet ist, strömt dann durch den Wärmetauscher 11, und zwar der Sekundärseite, und zwar genauso wie ein Teil der Zuluft, die die Primärseite der Wärmetauschers 11 passiert hat.

Die Entscheidung darüber, ob die Prozessluft aus nur Zuluft oder nur Abluft bzw. einer Kombination bzw. Mischung von beiden gebildet wird, erfolgt durch eine besondere Regelstrategie. Dazu ist im Regler 21 ein Algorithmus hinterlegt, der den Luftzustand der Abluft aus dem Raum und den Luftzustand der als Zuluft dienenden Außenluft vergleicht und anhand dieser Parameter vorzugsweise mittels einer mathematischen Formel entscheidet, wie die Prozessluft gebildet wird. Der Luftzustand der Außenluft wird vom Temperatur- und Feuchtefühler 22 ermittelt, während der Luftzustand der Abluft aus dem Raum vom Temperaturfühler 23 und dem Feuchtefühler 24 im Raum festgestellt wird. Die Fühler liefern vorzugsweise kontinuierlich Temperatur- und Feuchtewerte an den Regler 21.

Zur Errechnung der wirtschaftlichsten Art der Bildung der Prozessluft sind bei Verwendung der Abluft die Außenlufttemperatur, gegebenenfalls die Außenluftfeuchte, die Ablufttemperatur, die Abluftfeuchte, der Abluftvolumenstrorn und der Außenluftvolumenstrom maßgeblich. Bei der Bildung der Prozessluft aus der Zuluft sind die zulufttemperatur, Außenluftfeuchte, Außenlufttemperatur, Außenluftvolumenstrom und der Reaktionsgrad, das ist das Verhältnis der Volumenströme pro Luftweg im Wärmetauscher 11, zu berücksichtigen. Das erfindungsgemäße Verfahren sieht es vor, einen vereinfachten Regelalgorithmus zu finden, der mit möglichst wenigen der zuvor vollständig genannten Parametern auskommt. Dazu erfolgt eine Vereinfachung anhand von Modell-Laborrechnungen, bei als maßgebliches Auswahlkritierium die Differenz der erreichten Zulufttemperaturen ausreicht, um das wirtschaftlichere Verfahren zu bestimmen. Diese Vereinfachung ist so gewählt, dass die absolute Feuchte der Außenluft und der Abluft vernachlässigt werden kann und zur Vereinfachung angenommen wird, dass die Differenz der erreichten Zulufttemperaturen unabhängig von den Volumentströmen konstant bleibt. Dann ist die maßgebliche Differenz nur noch abhängig von der Außentemperatur und der Ablufttemperatur, die von den Temperaturfühlem 22 und 23 ermittelt werden. Alternativ kann auch die Feuchtigkeitsdifferenz zwischen der Außenluft und der Abluft, insbesondere der Raumluft, als Regelgröße dienen.

Anhand der Außenlufttemperatur und der Ablufttemperatur lässt sich die oben genannte Differenz der erreichten Zulufttemperaturen mit einer mathematischen Gleichung beschreiben, die nur noch von der Außen- und der Ablufttemperatur abhängig ist. Wenn dann der errechnete Wert positiv ist, erfolgt die Bildung der Prozessluft aus der Zuluft, während bei negativem Rechenwert die Prozessluft aus der Abluft gebildet werden kann, um auf wirtschaftliche Weise die höhere Kühlleistung zu erreichen. Wenn die Rechenwerte in einem mittleren Bereich liegen, kann die Prozessluft teilweise aus der Abluft und der Zuluft gebildet werden, wobei das Verhältnis der Abluft und der Zuluft zur Bildung der Prozessluft davon abhängig gemacht werden kann, wie groß absolut gesehen der negative oder positive Wert ist.

Möglich ist es auch, die absolute Feuchte im Raum im Vergleich zur absoluten Feuchte der Außenluft zu berücksichtigen und bei einer erwarteten höheren absoluten Feuchte der Raumluft die Berechnung entsprechend anzupassen.

Die Berechnung zur Auswahl der wirtschaftlichsten Verfahrensweise zur Bildung der Prozessluft wird als Algorithmus im Regler 21 hinterlegt, der den Luftzustand im zu kühlenden Raum, also der Abluft, mit dem Luftzustand der Außenluft vergleicht und innerhalb dieser Parameter mittels der beschriebenen Rechenformel die effizienteste Art der Bildung der Prozessluft auswählt. Dabei können noch eine höhere absolute Feuchte im Raum und unterschiedliche elektrische Leistungsaufnahmen der Ventilatoren, Insbesondere des Zuluftventilators 13, für die Bildung der Prozessluft aus Zuluft oder Abluft berücksichtigt werden mit dem Ziel, eine möglichst hohe Gesamtenergieeffizienz der Kühlvorrichtung zu erreichen.

### Bezugszeichenliste:

- 10: Gehäuse
- 11: Wärmetauscher
- 12: Bypassklappe
- 13: Zuluftventilator
- 14: Abluftventilator
- 15: Zulufteintrittsöffnung
- 16: Zuluftaustrittsöffnung
- 17: Ablufteintrittsöffnung
- 18: Abluftaustrittsöffnung
- 19: Luftfilter
- 20: Luftfilter
- 21: Regler
- 22: Temperatur- und Feuchtefühler
- 23: Temperaturfühler
- 24: Feuchtefühler

## Patentansprüche

1. Verfahren zum Kühlen eines Raumes, indem durch Verdunstung von Feuchtigkeit mittels Prozessluft die Temperatur von zum Kühlen des Raumes verwendeter Zuluft verrlngert wird, **dadurch gekennzeichnet, dass** als Prozessluft wahlweise Zuluft und/oder Abluft aus dem zu kühlenden Raum verwendet wird, wobei in Abhängigkeit vom Zustand der Abluft und/oder der Zuluft entweder Abluft, Zuluft oder Anteile von beiden als Prozessluft eingesetzt werden.

2. Verfahren nach Anspruch 1, **dadurch gekennzeichnet, dass** in Abhängigkeit vom Feuchtegehalt der Abluft und/oder der Zuluft entweder Abluft, Zuluft oder Anteile von beiden als Prozessluft verwendet werden.

3. Verfahren nach Anspruch 1 oder 2, **dadurch gekennzeichnet, dass** die Feuchte, vorzugsweise die Feuchte und Temperatur mindestens der Abluft, ermittelt werden, insbesondere zusätzlich auch mindestens die Temperatur der Zuluft ermittelt wird.

4. Verfahren nach einem der vorhergehenden Ansprüche, **dadurch gekennzeichnet, dass** anhand der gemessenen Feuchte und/oder Temperatur entschieden wird, insbesondere durch einen Regel-Algorithmus, ob Zuluft, Abluft oder Anteile von beiden als Prozessluft verwendet werden.

5. Verfahren nach einem der vorhergehenden Ansprüche, **dadurch gekennzeichnet, dass** die Kühlung durch indirekte Verdunstung mit einem befeuchtbaren Wärmetauscher (11) durchgeführt wird, wobei der Wärmetauscher (11) einerseits von der Zuluft und andererseits von der Abluft durchströmt wird.

6. Verfahren nach Anspruch 5, **dadurch gekennzeichnet, dass** bei Bedarf mindestens ein Teil der Abluft am Wärmetauscher (11) vorbeigeleitet wird.

7. Verfahren nach Anspruch 5 oder 6, **dadurch gekennzeichnet, dass** die Einstellung der Menge der Abluft, die am Wärmetauscher (11) vorbeigeführt wird von einer Steuerung, insbesondere einem Regler (21), beeinflusst wird und die Steuerung bzw. der Regler (21) eine Prozessluftklappe, insbesondere Bypassklappe (12), zum Vorbeiführen der Abluft am Wärmetauscher (11) bedarfsgerecht steuert oder regelt, insbesondere einen Stellantrieb für die Prozessluftklappe bzw. Bypassklappe (12) entsprechend betätigt.

8. Verfahren nach einem der Ansprüche 5 bis 7, **dadurch gekennzeichnet, dass** der Wärmetauscher (11) befeuchtet wird, wobei das Befeuchten im Wärmetauscher (11) und alternativ oder zusätzlich in einer Vorkammer desselben erfolgt.

9. Verfahren nach einem der vorhergehenden Ansprüche, **dadurch gekennzeichnet, dass** als Zuluft Frischluft, insbesondere frische Außenluft, verwendet wird.
